# FASCICULE DE BREVET EUROPEEN

(11) **EP 2 541 291 B1**
(45) Date de publication et mention de la délivrance du brevet: **07.04.2021**
(21) Numéro de dépôt: 12174081.5
(22) Date de dépôt: 28.06.2012
(51) Int. Cl.: G02B 6/00, F21V 8/00

(54) **Guide de lumière avec portion de découplage et cache récoltant les rayons découplés**
Lichtwellenleiter mit Entkoppelungsabschnitt, und Strahlenblende, in der die entkoppelten Strahlen gesammelt werden
Light guide with decoupling portion and cover collecting the decoupled rays

(30) Priorité: 29.06.2011 FR 1155785
(43) Date de publication de la demande: 02.01.2013
(73) Titulaire: Valeo Vision, 93012 Bobigny (FR)
(72) Inventeur: Godbillon, Vincent, 75011 Paris (FR)

(56) Documents cités:
- WO-A1-2009/073470
- WO-A1-2010/050137

## Description

L'invention a trait à un guide de lumière pouvant être rectiligne ou présenter un profil courbe. L'invention a trait également à un dispositif d'éclairage et/ou de signalisation notamment pour véhicule, le dispositif comprenant un guide de lumière.

Dans le domaine de l'éclairage et de la signalisation de véhicules automobiles, il est de plus en plus fréquent d'utiliser des guides optiques. En effet, les guides optiques présentent l'avantage de pouvoir prendre des formes géométriques très variées et d'amener une surface éclairante même dans des zones peu accessibles du dispositif d'éclairage et/ou de signalisation, contribuant ainsi au style du dispositif.

Par guide optique, on vise dans la présente demande une pièce transparente ou translucide à l'intérieur de laquelle des rayons lumineux se propagent de manière contrôlée depuis une des extrémités du guide, appelée « face d'entrée » jusqu'à au moins une face de sortie. La propagation de manière contrôlée s'effectue généralement par des réflexions internes sur diverses faces, appelées faces de réflexion interne ou dioptre de guidage.

Dans certains guides de lumière, les faces de réflexion interne peuvent renvoyer la lumière en direction d'une face de sortie autre que la face terminale, de telle manière qu'un observateur a alors l'impression que ladite face de sortie est éclairée et que cette face de sortie correspond à une source lumineuse. Selon certains modes de réalisation, par exemple comme cela est décrit dans la demande de brevet DE 198 50 443 A1 et la demande de brevet EP 1 780 463 A1, cette face de sortie est notamment une des faces de réflexion interne. En d'autres termes, la surface externe du guide forme avec l'air ambiant un dioptre apte à assurer d'une part, la propagation des rayons le long du guide par réflexion totale et d'autre part, à permettre la sortie d'une partie de ces rayons en vue de la fonction d'éclairage ou de signalisation. Dans ce cas, certains rayons incidents sur une première face de réflexion interne sont renvoyés avec un angle d'incidence sur une seconde face de réflexion interne, l'angle d'incidence étant tel, qu'au lieu de se réfléchir sur cette seconde face de réflexion interne, ces rayons sont transmis et sortent du guide. Ces premières faces de réflexion interne peuvent être obtenues par la présence d'une série de prismes sur une face arrière de la surface extérieure du guide, comme cela est décrit dans les documents DE 198 50 443 A1 et EP 1 780 463 A1. De tels guides optiques comportant des prismes permettent d'obtenir l'émission d'une lumière dont l'aspect est homogène sur la face de sortie, lorsque le guide est à l'état allumé. Dans l'enseignement du document DE 198 50 443 A1, le tronçon de guide de lumière s'étendant depuis l'extrémité recevant les rayons lumineux de la source de lumière jusqu'à la succession de prismes, présente une section variable destinée à dévier les rayons se réfléchissant sur le dioptre formé par ce tronçon, et ce dans un objectif d'amélioration de l'homogénéisation de l'éclairage produit par le guide.

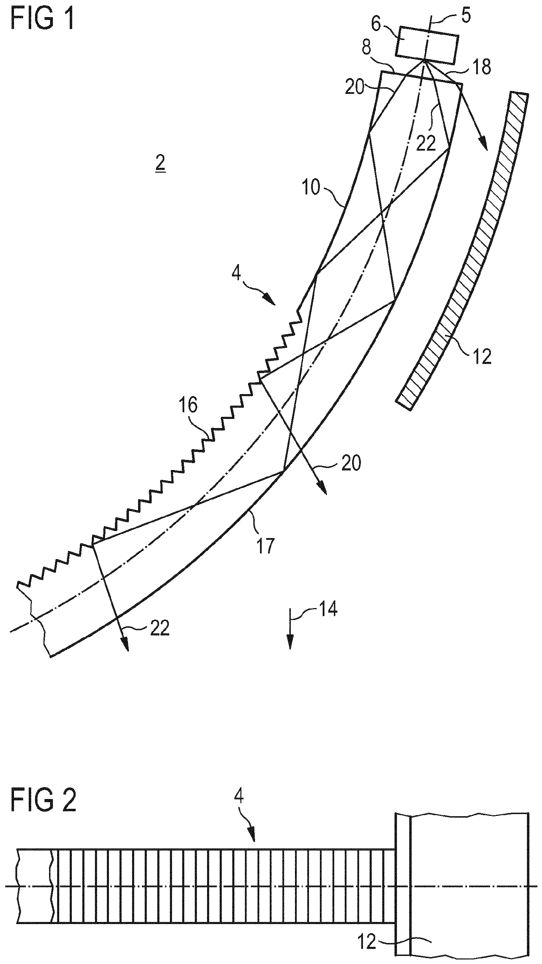

Une certaine problématique peut toutefois se poser dans un guide de lumière conforme à l'enseignement sus mentionné, comme cela est illustré aux figures 1 à 4 de la présente demande. La figure 1 illustre un dispositif d'éclairage ou de signalisation 2 comprenant un guide de lumière 4 s'étendant selon une direction longitudinale 5 généralement courbe. Une source de lumière 6 est disposée en face d'une extrémité arrière du guide 4 formant une face d'entrée 8 pour les rayons lumineux destinés à parcourir le guide. Le guide de lumière 4 comprend une série de facettes réfléchissantes 16 sur une face arrière de manière à découpler une partie des rayons parcourant le guide, qui sortiront alors par la face avant 17 du guide et ce en vue d'une fonction d'éclairage ou de signalisation selon une direction principale 14 du dispositif. Les rayons 20 et 22 émis par la source 6 symétriquement par rapport à la direction longitudinale 5 subissent au moins une réflexion du type réflexion totale sur le dioptre formé par la surface extérieure du guide pour ensuite être découplés par les facettes réfléchissantes 16 et participer au faisceau d'éclairage. La surface du guide forme en effet un dioptre entre le matériau du guide d'un indice de réfraction donné (typiquement de l'ordre de 1.6 pour du polycarbonate) et l'air ambiant d'un indice de réfraction différent (très proche de 1). Cette différence d'indice de réfraction de deux milieux contigus a pour conséquence qu'il existe un angle d'incidence limite au delà duquel la réfraction est impossible et pour lequel il y a réflexion totale. Dans le cas d'un milieu en polycarbonate entouré d'air, cet angle limite est de l'ordre de 39° (selon la loi de Snell-Descartes). Dans le cas du polyméthacrylate, l'indice de réfraction est de l'ordre de 1.5 et l'angle limite d'environ 42°.

Le dispositif comprend également un cache 12 disposé en regard de la face avant 17 du guide de lumière, la partie arrière du guide de lumière 4 comprenant la face d'entrée 8 et la source de lumière 6. L'objectif de ce cache est de récolter les rayons parasites tels que le rayon 18 qui sont découplés avant de rencontrer la zone active de découplage avec les facettes réfléchissantes 16. Ces rayons qui sont parmi les plus inclinés par rapport à la face d'entrée rencontrent le dioptre avec un angle d'incidence inférieur à l'ange limite mentionné ci-dessus et sortent du guide avec réfraction. Ils sont susceptibles de générer un éclairage inhomogène et inesthétique. Il est donc nécessaire de les rendre non visibles. L'image produite est illustrée à la figure 2 qui montre le dispositif vu par un observateur disposé devant le dispositif. Le guide 4 est éclairé de manière homogène et on peut observer une série de traits verticaux correspondant aux arêtes des facettes réfléchissantes. Le cache 12 masque bien la partie arrière du guide, ses inhomogénéités et la source de lumière.

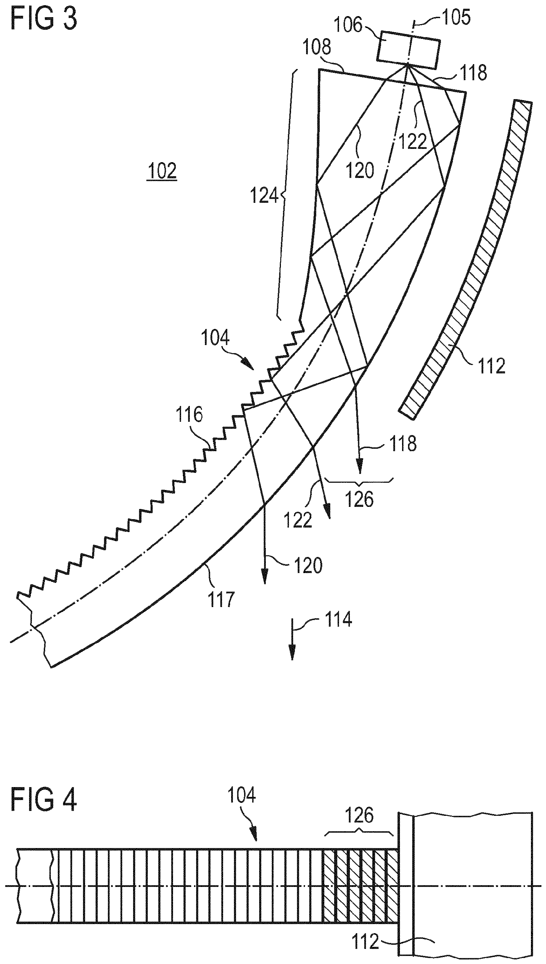

Pour des raisons techniques de fixation du guide de lumière, de fixation de la source lumineuse sur le guide et/ou de démoulage du guide, il peut être nécessaire de prévoir une partie du guide avec une section variable, plus particulièrement l'extrémité comprenant la face d'entrée à proximité de la source de lumière. En effet, la fixation du guide de lumière à son extrémité du côté de sa face d'entrée ainsi que la fixation de la source de lumière à cette extrémité peut imposer une conception comprenant notamment des pions de fixations ainsi que des épaulements au niveau de l'extrémité du guide. Des telles formes peuvent imposer au guide de lumière de présenter une dépouille apte à permettre un démoulage selon la direction longitudinale du guide, c'est-à-dire une dépouille avec des bords inclinés de manière opposée. Un dispositif comprenant un tel guide est illustré à la figure 3 où les détails de son extrémité avec les moyens de fixation ont été omis pour des raisons de clarté d'exposé. De nombreux éléments constitutifs des dispositifs illustrés dans cette figure correspondent à ceux de la figure 1. Une numérotation cohérente a été adoptée pour désigner ces différents éléments sachant que les signes de référence de la figure 3 correspondent à ceux de la figure 1 à cette différence près qu'ils sont majorés de 100. Il en va de même pour la figure 4. Des numéros spécifiques ont été employés pour désigner les éléments n'étant pas présents à la figure 1.

Le dispositif 102 comprend un guide de lumière 104 de profil généralement courbe 105 et comprenant un tronçon 124 à section variable s'étendant depuis la face d'entrée 108 jusqu'à la succession de facettes réfléchissantes 116 destinée au découplage progressif des rayons lumineux. Similairement au dispositif de la figure 1, le dispositif comprend également un cache 112 disposé devant la partie arrière du guide s'étendant depuis la face d'entrée 108 jusqu'aux facettes réfléchissantes, cette partie correspondant à la partie à section variable. Les rayons 120 et 122 émis par la source 106 symétriquement par rapport à la direction longitudinale subissent au moins une réflexion du type réflexion totale sur le dioptre formé par le tronçon à section variable 124 pour ensuite être découplés par les facettes réfléchissantes et participer au faisceau d'éclairage. Le rayon 118 incident sur la face d'entrée 108 avec un angle un peu plus important que celui des rayons 120 et 122 va subir une première réflexion totale sur une zone avant du dioptre et ensuite une deuxième réflexion totale sur une zone arrière du dioptre pour ensuite rencontrer à nouveau la dioptre à une zone avant avec un angle d'incidence inférieur ou égal à l'angle limite. Il va ainsi être réfracté et sortir du guide selon une direction proche de la direction principale d'éclairage 114 sans rencontrer le cache 112. Ce découplage intempestif est causé par la diminution de section du tronçon 124 du guide qui, par un jeu de réflexions successives, diminue progressivement l'angle d'incidence des rayons, par rapport à la normale au dioptre formé par le guide. En fonction de divers paramètres tels que la longueur du tronçon à section variable et la variabilité de sa section le long de sa direction longitudinale, une partie des rayons émis par la source lumineuse 106 sort du tronçon à section variable du guide sans rencontrer le cache 112, tel que le rayon 118. Ces rayons vont générer une zone de plus haute intensité lumineuse 126 à proximité du bord du cache 112, comme cela est illustré à la figure 4. Une telle zone rend le faisceau d'éclairage fort inhomogène et par conséquent pénalisant tant d'un point de vue photométrique que d'un point de vue esthétique. L'invention a pour objectif de proposer un guide de lumière et un dispositif d'éclairage et/ou de signalisation apte à pallier au moins un des inconvénients sus mentionnés. Plus particulièrement, l'invention a pour objectif de proposer un guide de lumière et un dispositif d'éclairage et/ou de signalisation apte à générer une image d'éclairage homogène, plus particulièrement encore évitant des zones de surintensité causée par des imperfections du guide liées à diverses contraintes de montage et/ou de fabrication.

L'invention a pour objet un guide de lumière selon la revendication 1.

Ainsi, il est volontairement formé une irrégularité du dioptre de guidage, irrégularité formée par la portion de découplage. Le dioptre de découplage par réfraction de cette irrégularité est agencé de manière à réfracter des rayons lumineux qui en l'absence de l'irrégularité du dioptre de guidage seraient réfléchis par le dioptre de guidage. Ainsi ces rayons lumineux vont être découplés du guide, c'est-à-dire qu'ils ne vont plus se propager dans le guide par réflexions internes successives sur ses dioptres. Ceci permet de faire sortir tôt du guide certains rayons qui seraient réfléchis en nombre, avec un angle d'incidence trop grand sur la partie de dioptre opposée à celle où ils s'étaient réfléchi, ce qui aurait créé une inhomogénéité sur le guide, par exemple une tâche plus lumineuse. Ainsi, la création de cette irrégularité permet d'améliorer l'homogénéité de l'aspect lumineux du guide.

Le guide de lumière est un guide de dispositif d'éclairage et ou de signalisation de véhicule automobile.

Selon un mode avantageux de réalisation, le guide présente une zone d'entrée des rayons lumineux. Avantageusement, les rayons sont réfractés par le dioptre de découplage par réfraction directement après être entrés dans la guide par la zone d'entrée ou après avoir subi une unique réflexion sur le dioptre de guidage.

Par guide optique, on vise dans la présente demande une pièce transparente ou translucide à l'intérieur de laquelle des rayons lumineux se propagent de manière contrôlée depuis une des extrémités du guide, appelée « face d'entrée » jusqu'à au moins une face de sortie. La propagation de manière contrôlée s'effectue généralement par des réflexions internes sur diverses faces, appelées faces de réflexion interne ou dioptre de guidage. Préférentiellement, le guide est destiné à ce qu'à proximité de la face d'entrée, soit disposée au moins une source lumineuse, par exemple une source lumineuse de petite taille, telle qu'une diode électroluminescente. Les rayons lumineux émis par cette source vont se propager dans le guide optique vers la face opposée à la face d'entrée appelée « face terminale », par l'intermédiaire de faces de réflexion interne, situées entre la face d'entrée et la face terminale. Selon un mode avantageux de l'invention, le guide comprend au moins deux portions de découplage opposées transversalement par rapport à l'épaisseur du guide. Ceci permet notamment d'éliminer davantage de rayons parasites. L'épaisseur du guide est la plus petite dimension de celui-ci, par opposition à sa longueur pour un guide environ tubulaire, ou par opposition à sa largueur et sa longueur pour un guide surfacique (encore appelé guide en nappe).

Le guide comprend un tronçon de section variable, formant une dépouille ou une aspérité, la ou au moins une des portions de découplage étant disposée sur le tronçon de section variable. La dépouille est orientée de manière à ce que la section transversale diminue dans la direction de propagation de la lumière. Cette dépouille permet de réaliser plus facilement le démoulage du guide lors de sa fabrication. La dépouille ou l'aspérité peuvent être utilisée pour fixer le guide. En l'absence de la portion de découplage, cette aspérité ou cette dépouille réfléchirait des rayons avec un angle tel qu'arrivés sur la face opposée ils ne seraient pas transmis par réflexion interne mais réfractés. On observerait ainsi une inhomogénéité.

La section dudit tronçon varie préférentiellement de telle manière que, sans la portion de découplage par réfraction selon l'invention, après un certain nombre de réflexions internes la lumière s'échapperait massivement du guide au niveau de la zone de section variable ou du début de la zone de propagation. Cela créerait une surintensité.

Selon un encore autre mode avantageux de l'invention, le tronçon de section variable est adjacent à une extrémité du guide, préférentiellement à une extrémité comprenant une face d'entrée de lumière dans le guide. Cela permet de fixer le guide au plus près de la source lumineuse. De plus, la dépouille présente plus d'intérêt pour le guide lors du démoulage.

Selon un encore autre mode avantageux de l'invention, la ou au moins une des portions de découplage est disposée à proximité de l'extrémité du guide de manière à découpler majoritairement des rayons provenant de l'extrémité du guide sans que ceux-ci soient réfléchis par le dioptre de guidage. Les rayons réfléchis à proximité de la source sont davantage susceptibles de sortir du guide une fois qu'ils ont été réfléchis par la section variable. On améliore donc l'homogénéité du guide en positionnant ainsi la portion de découplage.

Selon un encore autre mode avantageux de l'invention, le tronçon de section variable du guide comprend des moyens de fixation du guide. Selon une variante de réalisation au moins, certains de ces moyens de fixation sont destinés à fixer une source lumineuse telle qu'une LED ou encore une platine avec circuit imprimé (PCB) portant cette LED. En complément ou alternativement, certains de ces moyens de fixations sont destinés à fixer le guide à un support, notamment un boîtier de dispositif d'éclairage et/ou de signalisation. On a ainsi des moyens de fixer aisément le guide de lumière, la portion de découplage permettant d'éviter que ces moyens ne génèrent une inhomogénéité lumineuse.

Selon un encore autre mode avantageux de l'invention, le dioptre de découplage de la ou d'au moins une des portions de découplage est généralement inclinée par rapport à la surface adjacente du dioptre de guidage.

Selon un encore autre mode avantageux de l'invention, la ou au moins une des portions de découplage forme un volume prismatique. C'est un moyen plus simple de réalisation.

Selon un encore autre mode avantageux de l'invention, la section longitudinale de la ou de au moins une des portions de découplage comporte un profil courbe. Cela permet de diminuer l'épaisseur de la portion de découplage.

Selon un encore autre mode avantageux de l'invention, la surface extérieure du guide comprend à une face arrière du guide une série de facettes réfléchissantes destinées à découpler par réflexion des rayons parcourant le guide, la ou au moins une des portions de découplage du dioptre étant disposée sur la face arrière et/ou une face avant opposée à la face arrière. Ce guide permet par la série de facette de découpler les rayons tout au long du guide, qui présente ainsi une face éclairée sur toute sa longueur. Préférentiellement, la portion de découplage est placée avant la série de facettes, de manière à découpler certains rayons réfléchis avant la série de facettes.

L'invention a également pour objet un dispositif d'éclairage et/ou de signalisation pour véhicule comprenant un guide de lumière destiné à être alimentée en rayons lumineux par une source lumineuse et ayant un axe optique correspondant à une direction principale d'éclairage et/ou de signalisation; remarquable en ce que le guide de lumière est conforme à l'invention; et en ce que le dispositif comprend au moins un cache disposé de manière à récolter les rayons sortant de la ou d'au moins une des portions de découplage. Le cache masque ainsi ces rayons et les empêche d'être vus.

Selon une variante de réalisation préférentielle, le dispositif d'éclairage et/ou de signalisation comprend également un boîtier, à l'intérieur duquel le guide est fixé et une glace de fermeture de ce boîtier. Cette glace permet de laisser passer des rayons de lumière, par exemple tous les rayons lumineux entrant en contact avec cette glace, ou seulement les rayons lumineux d'une certaine couleur, dans le cas par exemple d'un feu de signalisation, tel qu'un feu stop, d'un feu de position arrière ou d'un feu de position avant. Selon cette variante de réalisation, le cache permet d'empêcher les rayons d'atteindre la glace et donc de sortir du dispositif d'éclairage et/ou de signalisation.

Préférentiellement, le ou au moins un des caches est disposé en vis-à-vis de ladite portion de découplage par rapport à l'axe optique du dispositif d'éclairage et/ou de signalisation, de manière à cacher ladite portion de découplage. Selon un mode avantageux de l'invention, le guide comprend un tronçon de section variable formant préférentiellement une dépouille, la ou au moins une des portions de découplage étant disposée sur le tronçon de section variable, et le ou au moins un des caches est disposé en vis-à-vis du tronçon de section variable par rapport à l'axe optique du dispositif de manière à cacher le tronçon. On peut ainsi découpler les rayons du guide au plus près du cache, ce qui facilite leur masquage.

Selon un autre mode avantageux du dispositif d'éclairage et/ou de signalisation selon l'invention, le ou au moins un des caches est en vis-à-vis de la face avant de la surface extérieure du guide. De préférence, la portion de découplage est située sur la face avant. La face avant est la face par laquelle sorte des rayons pour participer à la fonction d'éclairage et/ou de signalisation. Préférentiellement, la surface extérieure du guide comprend à une face arrière du guide une série de facettes réfléchissantes destinées à découpler par réflexion des rayons parcourant le guide, la ou au moins une des portions de découplage du dioptre étant disposée sur la face arrière ou une face avant opposée à la face arrière, et le ou au moins un des caches s'étend le long du guide essentiellement depuis son extrémité jusqu'au niveau de la série de facettes réfléchissantes situées sur la face arrière du guide.

Selon un autre mode avantageux du dispositif d'éclairage et/ou de signalisation selon l'invention, le ou au moins un des caches est en vis-à-vis de la face arrière de la surface extérieure du guide. De préférence, la portion de découplage est située sur la face arrière. La face arrière est la face opposée à la face avant. Préférentiellement, la surface extérieure du guide comprend à une face arrière du guide une série de facettes réfléchissantes destinées à découpler par réflexion des rayons parcourant le guide, la ou au moins une des portions de découplage du dioptre étant disposée sur la face arrière ou une face avant opposée à la face arrière, et le ou au moins un des caches s'étend le long de la série de facettes réfléchissantes en vis-à-vis de la face arrière de la surface extérieure du guide.

Selon un encore autre mode avantageux du dispositif d'éclairage et/ou de signalisation selon l'invention, le tronçon de section variable du guide comprend des moyens de fixation du guide à un support du guide dans le boîtier du dispositif d'éclairage et/ou de signalisation.

Selon une variante de réalisation, le guide de lumière selon l'invention est de type linéaire, courbe, droit ou en anneau. Selon une autre variante de réalisation le guide de lumière est surfacique. On comprend par linéaire un guide qui se présente sous forme d'un anneau, d'une tige droite ou courbe, préférentiellement destiné à ce qu'une source de lumière soit placée à l'une de ses extrémités. Par opposition, un guide surfacique se présente sous forme d'une plaque, d'un panneau, qui peut être plan ou courbe, préférentiellement destiné à être utilisé avec plusieurs sources de lumière réparties sur le chant d'un des bords du panneau.

D'autres caractéristiques et avantages de la présente invention seront mieux compris à l'aide de la description et des dessins parmi lesquels :
- la figure 1 est une vue en coupe d'un premier dispositif d'éclairage et/ou de signalisation connu ;
- la figure 2 est une vue de face du dispositif de la figure 1 lorsque ce dernier est en fonction ;
- la figure 3 est une vue en coupe d'un deuxième dispositif d'éclairage et/ou de signalisation connu ;
- la figure 4 est une vue de face du dispositif de la figure 3 lorsque ce dernier est en fonction ;
- la figure 5 est une vue en coupe d'un dispositif d'éclairage et/ou de signalisation selon un premier mode de réalisation de l'invention ;
- la figure 6 est une vue de face du dispositif de la figure 5 lorsque ce dernier est en fonction ;
- la figure 7 est une vue en coupe d'un partie d'un dispositif d'éclairage et/ou de signalisation constituant une première alternative à celui de la figure 5 ;
- la figure 8 est une vue en coupe d'un partie d'un dispositif d'éclairage et/ou de signalisation constituant une deuxième alternative à celui de la figure 5 ;
- la figure 9 est une vue en coupe d'un dispositif d'éclairage et/ou de signalisation selon un deuxième mode de réalisation de l'invention ;
- la figure 10 est une vue en coupe d'un dispositif d'éclairage et/ou de signalisation selon un troisième mode de réalisation de l'invention ;
- la figure 11 est une vue en coupe d'un dispositif d'éclairage et/ou de signalisation selon un quatrième mode de réalisation de l'invention ;
- la figure 12 est une vue en perspective d'une alternative au guide de lumière de la figure 3, où le guide de lumière est configuré du type « barreau » ;
- la figure 13 est une vue en perspective d'une alternative au guide de lumière du premier mode de réalisation de l'invention selon la figure 5, le guide de lumière étant d'une configuration du type « barreau ».

Dans la description qui va suivre, les termes qualifiant la position de certains éléments, tels que « avant », « arrière », « devant », « derrière », « horizontal », « vertical », etc. se référent aux agencements spécifiques des figures. Ces termes ne sont cependant pas à être interprétés de manière stricte et absolue mais bien relative. En effet, les dispositifs de signalisation qui y sont décrits peuvent être en pratiques orientés différemment sans s'éloigner aucunement de l'invention.

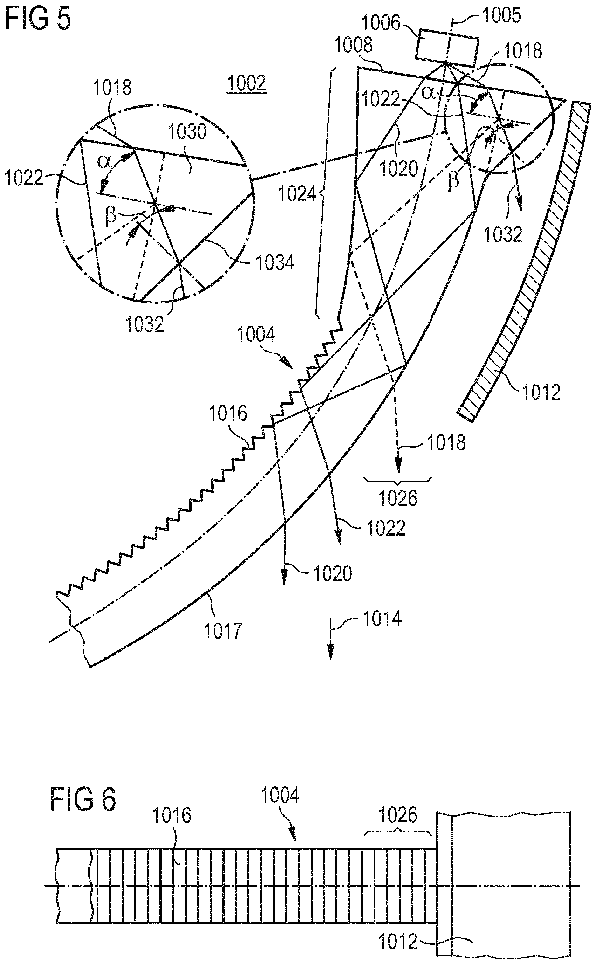

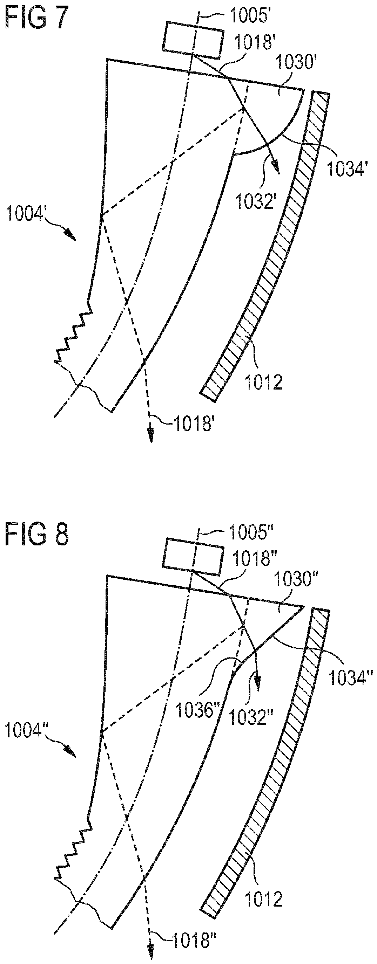

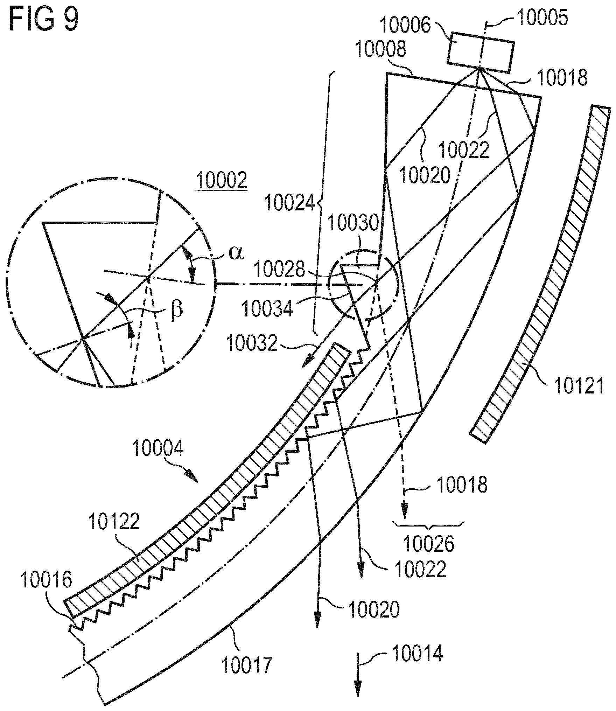

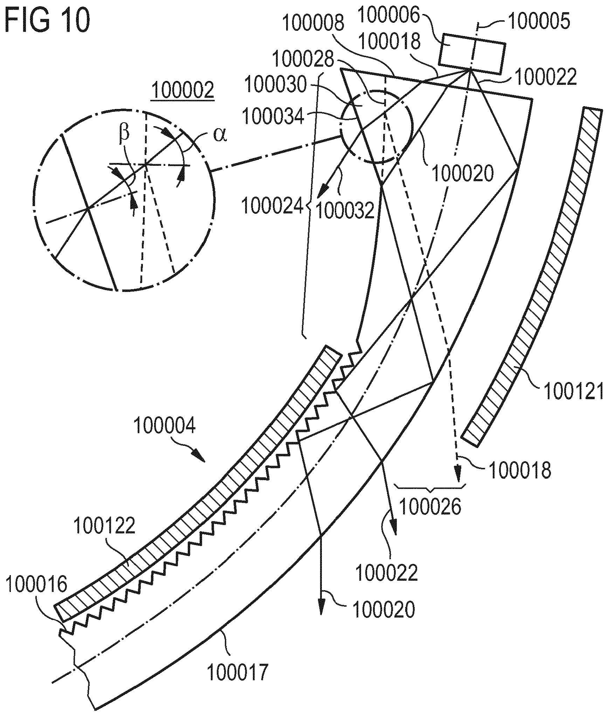

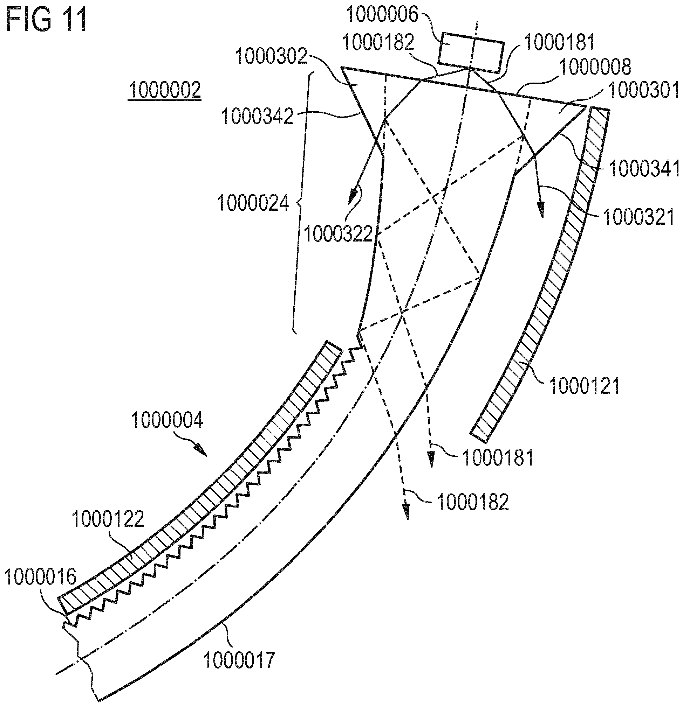

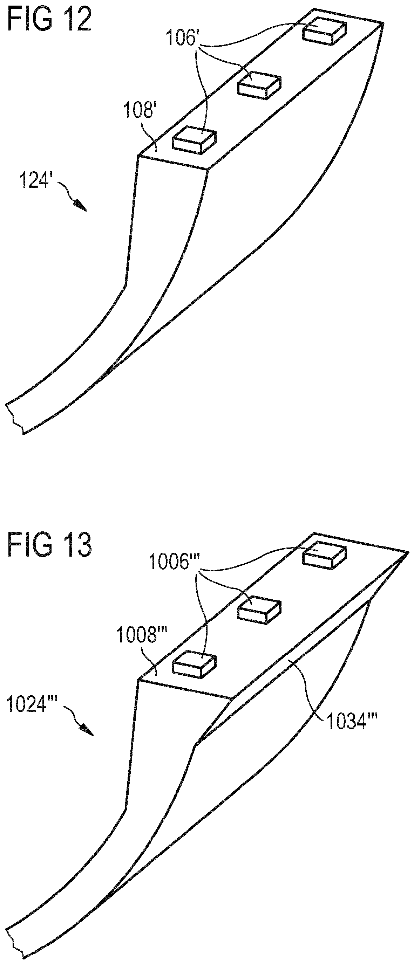

Certains éléments constitutifs des dispositifs et guides de lumière illustrés dans les figures 5, 7, 8, 9, 10, 11, 12 et 13 correspondent à ceux des figures 1 à 4. Une numérotation cohérente a été adoptée pour désigner ces différents éléments sachant que les signes de référence de la figure 5 correspondent à ceux de la figure 1 à cette différence qu'ils sont majorés de 1000. Il en va de même pour la figure 9 où ils sont majorés de 10.000, pour la figure 10 où ils sont majorés de 100.000 et pour la figure 11 où ils sont majorés de 1000.000. En ce qui concerne les figures 7, 8 et 13, la numérotation correspond à celle de la figure 5 à la différence près que les signes de référence de la figure 7 sont complétés d'un signe prime «'», les signes de référence de la figure 8 sont complétés d'un signe double prime «"», et les signes de référence de la figure 13 sont complétés d'un signe triple prime «"'». Les signes de référence de la figure 12 correspondent à ceux de la figure 2 à la différence près que les signes de référence de la figure 12 sont complétés d'un signe prime «'». Des numéros spécifiques à chaque exemple de réalisation ont été employés pour désigner les éléments n'étant pas présents aux figures 1 à 4.

Les figures 5 et 6 illustrent un premier mode de réalisation de l'invention. Le dispositif d'éclairage et/ou de signalisation 1002 de la figure 5 comprend un guide de lumière 1004 de profil généralement courbe suivant une direction longitudinale 1005 représentée par un trait interrompu du type trait d'axe. Le guide est en matériau transparent tel que du polycarbonate ou du polyméthacrylate. L'indice de réfraction du matériau transparent (typiquement de l'ordre de 1.6 pour du polycarbonate) différent de celui de l'air entourant le guide (de l'ordre de 1) a pour conséquence que la surface extérieure du guide constitue un dioptre apte à réfracter et réfléchir des rayons lumineux la rencontrant. Plus précisément, les rayons 1020 et 1022 émis par la source lumineuse 1006 généralement symétriquement par rapport à la direction longitudinale subissent au moins une réflexion du type réflexion totale sur le dioptre formé par la surface extérieure du guide pour ensuite être découplés par les facettes réfléchissantes 1016 et participer au faisceau d'éclairage suivant la direction principale d'éclairage 1014 du dispositif. Le guide 1004 comprend un tronçon 1024 s'étendant depuis la face d'entrée 1008 des rayons lumineux émis par la source 1006. Ce tronçon 1024 présente une section transversale variable. Plus précisément sa surface extérieure 1025 formant une partie du dioptre du guide forme une dépouille orientée de manière à ce que la section diminue depuis la face d'entrée 1008 jusqu'à la fin du tronçon. Ce dernier s'étend préférentiellement jusqu'à la zone de section transversale régulière avec les facettes réfléchissantes 1016. Dans le cas particulier de la figure 5, le tronçon à section variable 1024 présente dans un plan horizontal une section avec deux profils inclinés par rapport à la direction longitudinale. Le profil arrière est généralement droit et le profil avant est généralement courbe. La surface extérieure 1025 du tronçon 1024 forme par conséquent un dioptre en forme d'enveloppe fermée dont la section diminue le long de sa direction principale dans le sens de parcours de rayons lumineux.

Le tronçon à section variable 1024 comprend également une portion 1030 de découplage de certains rayons. Cette portion de découplage 1030 est de forme généralement prismatique. Elle est disposée à une zone avant du tronçon 1024, plus particulièrement au niveau de la face d'entrée 1008 des rayons. Sa section dans un plan horizontal comprend un bord incliné 1034 par rapport au bord adjacent. Cette portion 1030 constitue un complément ou une excroissance de matière qui permet à la majorité des rayons la traversant de sortir du dioptre par réfraction. En effet, le rayon 1018 qui présente un angle d'incidence par rapport à la face d'entrée 1008 qui est plus important que le rayon 1022 va se propager dans le matériau du guide suivant une direction davantage inclinée par rapport à la direction longitudinale du guide et va rencontrer la surface extérieure du guide faisant partie de la portion de découplage. L'angle d'incidence β du rayon 1018 avec cette surface 1034 est inférieur à l'ange limite entre la réfraction et la réflexion totale, si bien qu'il va être réfracté par cette partie du dioptre et sortir du guide. Sur la figure 5, ce rayon réfracté sortant est référencé 1032. Ce rayon va ensuite rencontrer le cache 1012 et ne sera pas visible pour un observateur du dispositif en fonctionnement. En l'absence de la portion de découplage 1030, le rayon 1018 rencontrerait la surface extérieure 1028 du tronçon 1024 qui est représentée en trait pointillé avec un angle d'incidence α sensiblement supérieur à l'angle d'incidence β avec la surface inclinée 1034 de la portion de découplage 1030. Cet angle d'incidence α est supérieur à l'angle limite du dioptre, si bien que le rayon 1018, en l'absence de la portion de découplage 1030, serait réfléchi pour atteindre la face opposée située dans la zone à section variable, dans cet exemple dans la dépouille. Du fait de cette section variable, ce rayon serait réfléchi avec un angle tel qu'en atteignant à nouveau la face où il avait été réfléchi une première fois, il sortirait finalement du tronçon 1024 et générerait une zone de surbrillance comme cela a été décrit en relation avec les figures 3 et 4. Un tel rayon est illustré en trait pointillé à la figure 5.

L'image produite par le dispositif d'éclairage 1002 de la figure 5 est visible à la figure 6 qui correspond à une vue de face du dispositif en fonctionnement. Aucune zone de surbrillance ou sur éclairage n'est visible dans une zone 1026 à proximité du cache 1012.

Il est à noter que la portion de découplage 1030 illustrée à la figure 5 peut prendre diverses formes telles qu'illustrées aux figures 7 et 8.

La figure 7 illustre une première variante du guide de lumière 1024 de la figure 5. A la différence du guide de la figure 5, la portion de découplage 1030' du guide 1004' n'est plus prismatique mais au moins partiellement courbe. Plus précisément, la surface extérieure 1034' formant dioptre de découplage est maintenant courbée. Dans la figure 5, la portion de découplage 1030 comprend une pointe située au niveau de la face d'entrée 1008, à l'extrémité du guide 1004. Dans la variante en figure 7, la courbure permet de diminuer l'épaisseur de l'aspérité formant la portion de découplage. La portion de découplage permet toujours de découpler la majorité des rayons susceptibles de créer une inhomogénéité. Le rayon 1018' rencontre la surface extérieure 1034' de la portion de découplage 1030'. Le rayon sortant 1032' est arrêté par le cache 1012.

La figure 8 illustre une deuxième variante du guide de lumière 1024 de la figure 5. A la différence du guide de la figure 5, la portion de découplage 1030" du guide 1004" comprend une zone 1036" formant un congé de raccordement avec le reste du tronçon 1024". Similairement à ce qui a été décrit en relation avec la figure 5, le rayon 1018" rencontre la surface extérieure 1034" du guide faisant partie de la portion de découplage 1030" avec un angle d'incidence inférieur à l'angle limite du dioptre, et ce malgré la présence du congé de raccordement 1036". Ce dernier a permet d'éviter les changements brutaux de pente et ainsi de faciliter la fabrication et d'améliorer la robustesse mécanique de la pièce.

Les portions de découplage 1030, 1030' et 1030" illustrées aux figures 5, 7 et 8 peuvent être positionnées à divers endroits du guide comme cela va être illustré en relation avec les figures 9, 10 et 11. Ces dernières illustrent d'autres exemples de réalisation de l'invention. Ces exemples constituent des variantes de l'exemple de la figure 5.

La figure 9 illustre un deuxième mode de réalisation de l'invention. Le dispositif d'éclairage et/ou de signalisation 10002 comprend, similairement à celui des figures 5 et 6, un guide de lumière 10004 de profil généralement courbe suivant une direction longitudinale 10005, avec un tronçon à section variable 10024, et un premier cache 10121 disposé devant ledit tronçon. Le guide 10004, plus particulièrement le tronçon à section variable comprend une portion de découplage 10030 disposée à une zone arrière dudit tronçon et à distance de la face d'entrée 10008. Cette portion de découplage 10030 permet de faire sortir la majorité des rayons la traversant, de manière à éviter une réflexion de ces rayons suivie d'une sortie des rayons par une zone avant du dioptre sans rencontrer le premier cache 10121. Un deuxième cache 10122 est disposé à l'arrière du guide, plus précisément à l'arrière du tronçon à section généralement constante, comportant la succession de facettes de réflexion 10016. Le deuxième cache 10122 permet de récolter les rayons sortant de la portion de découplage 10030.

La portion de découplage 10030 est disposée à distance de la face d'entrée 10008 de manière à être traversée par des rayons susceptibles de sortir du dioptre sans rencontrer le premier cache 10121 et ayant déjà subit, chacun, au moins une réflexion préalable sur le dioptre. Dans le cas précis de la figure 9, le rayon 10018 illustrant ce phénomène subit une première réflexion sur une zone avant du dioptre pour ensuite se propager au travers du tronçon à section variable 10024 vers la portion de découplage 10030. Similairement à la portion de découplage 1030 de la figure 5, la portion de découplage 10030 comprend un complément ou bossage de matière transparente de manière à former une surface de sortie 10034 inclinée par rapport à la surface adjacente ou encore par rapport à la surface 10028 que formerait le dioptre en l'absence de la portion de découplage 10030. Il en résulte que le rayon 10018 traversant la portion de découplage rencontre le dioptre 10034 avec un angle d'incidence β qui est inférieur à l'ange d'incidence α avec le dioptre 10028 en l'absence de ladite portion. L'angle d'incidence α est supérieur à l'angle limite, si bien que le rayon 10018 serait réfléchi, transmis et découplé tel que représenté en trait pointillé de manière à participer à une zone 10026 de surintensité d'éclairage non désirable. L'angle d'incidence β est inférieur à l'angle limite du dioptre. Le rayon 10018 va donc être transmis et réfracté par le dioptre vers l'arrière du guide pour ensuite être récolté par le deuxième cache 10122. Sur la figure 9, ce rayon réfracté sortant est référencé 10032.

La figure 10 illustre un troisième mode de réalisation de l'invention. Ce cas diffère des précédents. Dans les cas illustrés par les figures 5, 7, 8 et 9 les rayons gênants subiraient au moins deux réflexions totales internes avant d'être découplés massivement, en l'absence de la portion de découplage selon l'invention. Les modes de réalisation des figures 5, 7, 8 et 9 visent alors à supprimer une de ces réflexions totales pour éliminer le spot gênant. Dans le mode de réalisation de la figure 10, une seule réflexion totale avant découplage serait subie en l'absence de la portion de découplage, et c'est cette réflexion qu'on supprime. Le dispositif d'éclairage et/ou de signalisation 100002 comprend, similaire à celui des figures 5, 7, 8 et 9, un guide de lumière 100004 de profil généralement courbe suivant une direction longitudinale 100005, avec un tronçon à section variable 100024, et un premier cache 100121 disposé devant ledit tronçon. Le guide 100004, plus particulièrement le tronçon à section variable comprend une portion de découplage 100030 disposée à une zone arrière dudit tronçon au niveau de la face d'entrée 100008. Cette portion de découplage 100030 permet de faire sortir la majorité des rayons la traversant, de manière à éviter une réflexion de ces rayons suivie d'une sortie des rayons par une zone avant du dioptre sans rencontrer le premier cache 10121. Similairement au dispositif de la figure 9, un deuxième cache 100122 est disposé à l'arrière du guide, par exemple, comme illustré sur la figure 10, à l'arrière du tronçon à section généralement constante, comportant la succession de facettes de réflexion 100016. Le deuxième cache 100122 permet de récolter les rayons sortant de la portion de découplage 100030.

Similairement aux dispositifs des figures 5, 7 et 8, la portion de découplage 100030 est disposée au niveau de la face d'entrée 100008. Elle est toutefois disposée à une zone arrière du dioptre de manière à transmettre les rayons vers l'arrière du dispositif. Elle permet de transmettre la majorité des rayons qui, en l'absence de cette portion, rencontrerait la zone correspondante 100028 du dioptre et seraient majoritairement réfléchis et transmis par une zone avant du dioptre de manière à participer à la formation d'une zone de surintensité d'éclairage. Similairement à la portion de découplage 1030 de la figure 5 et la portion de découplage 10030 de la figure 9, la portion de découplage 100030 comprend un complément ou bossage de matière transparente de manière à former une surface de sortie 100034 inclinée par rapport à la surface adjacente ou encore par rapport à la surface 100028 que formerait le dioptre en l'absence de la portion de découplage 100030. Il en résulte que le rayon 100018 traversant la portion de découplage rencontre le dioptre 100034 avec un angle d'incidence β qui est inférieur à l'ange d'incidence α avec le dioptre 100028 en l'absence de ladite portion. L'angle d'incidence α est supérieur à l'angle limite, si bien que le rayon 100018 serait réfléchi, transmis et découplé tel que représenté en trait pointillé de manière à participer à une zone 100026 de surintensité d'éclairage non désirable. L'angle d'incidence β est inférieur à l'angle limite du dioptre. Le rayon 100018 va donc être transmis et réfracté par le dioptre vers l'arrière du guide pour ensuite être récolté par le deuxième cache 100122. Sur la figure 10, ce rayon réfracté sortant est référencé 100032.

La figure 11 illustre un quatrième mode de réalisation de l'invention. Il s'agit essentiellement d'une combinaison des premier et troisième modes des figures 5 (ou 7 ou 8) et 10. Le guide de lumière 1000004 comprend deux portions de découplage 1000301 et 1000302 au niveau de la face d'entrée 1000008, une première 1000301 sur la face avant 1000017 du guide 1000004 et une deuxième 1000302 sur une face arrière dudit guide. La première portion de découplage 1000301 correspond essentiellement à la portion de découplage 1030 de la figure 5, et la deuxième 1000302 correspond essentiellement à la portion de découplage 100030 de la figure 10.

Un premier rayon 1000181 émis vers l'avant par la source lumineuse 1000006 rencontre la surface extérieure de la première portion de découplage 1000301 selon un angle d'incidence inférieur à l'angle limite du dioptre et est alors réfracté pour former le rayon sortant 1000321, similairement aux rayons 1018 et 1032 de la figure 5 coopérant avec la portion de découplage 1030. Un deuxième rayon 1000182 émis vers l'arrière par la source lumineuse 1000006 rencontre la surface extérieure de la deuxième portion de découplage 1000302 selon un angle d'incidence inférieur à l'angle limite du dioptre et est alors réfracté pour former le rayon sortant 1000322, similairement aux rayons 100018 et 100032 de la figure 10 coopérant avec la portion de découplage 100030.

Les figures 3 à 11 illustrent des sections longitudinales de guides pouvant être par exemple tubulaires, sous forme de barreau, ou sous forme de nappe. Les figures 12 et 13 illustrent des réalisations de guides de lumière sous forme de barreau ou de guides surfaciques.

Plus particulièrement, la figure 12 illustre en perspective une réalisation du guide de lumière présentant une section longitudinale identique à celle de la figure 3. Sa face d'entrée présente une forme rectangulaire allongée. Dans le cas d'une telle réalisation, plusieurs sources de lumières 106' peuvent être disposées le long de la surface d'entrée 108' du guide de lumière 124'. Les problèmes décrits en relation avec le guide de lumière correspondant de la figure 3 sont également applicables au guide de la figure 12.

La figure 13 illustre en perspective une réalisation du guide de lumière présentant une section longitudinale identique à celle de la figure 5. Sa face d'entrée présente une forme rectangulaire allongée. Plusieurs sources lumineuses 1006'" peuvent alors être disposées ou réparties le long de la surface d'entrée allongée 1008'". La portion de découplage 1034'" présente alors une section rectangulaire correspondante. Tous les phénomènes décrits en relation avec les figures 5 et 6 sont pareillement présents ici. Il est également à noter que la réalisation en barreau du guide de lumière est applicable à tous les modes de réalisation de l'invention qui ont été décrits.

Les modes de réalisation qui viennent d'être détaillés sont purement illustratifs et donnés à titre d'exemple. En effet, il est à noter que la portion de découplage peut prendre diverses formes pour autant qu'elle assure sa fonction de découplage. La surface de sortie ne doit pas nécessaire présenter de profil rectiligne mais peut également être courbée. De plus, le guide peut comporter plusieurs portions de découplage, notamment en fonction des diverses contraintes de design et de dimensionnement. Ces portions de découplage peuvent par exemple être réparties longitudinalement ou sur le pourtour du guide.

De manière générale, la section du guide de lumière peut prendre diverses formes pour autant qu'elles forment un contour fermé.

## Revendications

1. Guide de lumière (1004 ; 10004 ; 100004 ;1000004) d'un dispositif d'éclairage et/ou de signalisation d'un véhicule automobile comprenant une surface extérieure formant un dioptre de guidage, le guide étant apte à guider des rayons lumineux par réflexion sur le dioptre de guidage ;
**caractérisé en ce que**
le guide comprend :
- au moins une portion de découplage (1030 ; 10030 ; 100030 ; 1000301, 1000302), avec un dioptre de découplage par réfraction (1034; 10034 ; 100034 ; 1000341, 1000342) agencé de manière à réfracter des rayons lumineux pour les découpler du guide, et ainsi les transmettre vers l'extérieur du guide à travers le dioptre de découplage par réfraction,
- un tronçon de section variable (1024, 10024 ; 100024 ; 1000024), formant une dépouille, la ou au moins une des portions de découplage (1030 ; 10030 ; 100030; 1000301, 1000302) étant disposée sur le tronçon de section variable,
la dépouille étant orientée de manière à ce que la section transversale diminue dans la direction de propagation de la lumière,
la dépouille étant configurée de telle sorte qu'en l'absence de la portion de découplage elle réfléchirait des rayons avec un angle tel qu'arrivés sur la face opposée ils ne seraient pas transmis par réflexion interne mais réfractés.

2. Guide de lumière selon la revendication 1, **caractérisé en ce que** le guide comprend au moins deux portions de découplage (1000301, 1000302) opposées transversalement par rapport à l'épaisseur du guide.

3. Guide de lumière selon l'une des revendications 1 et 2, **caractérisé en ce que** le tronçon de section variable (1024 ; 10024, 100024 ; 1000024) est adjacent à une extrémité du guide, préférentiellement à une extrémité comprenant une face d'entrée (1008 ; 10008, 100008 ; 1000008) de lumière dans le guide.

4. Guide de lumière selon la revendication précédente, **caractérisé en ce que** la ou au moins une des portions de découplage (1030 ; 10030 ; 100030 ; 1000301, 1000302) est disposée à proximité de l'extrémité du guide de manière à découpler majoritairement des rayons provenant de l'extrémité du guide sans que ceux-ci soient réfléchis par ledit dioptre de guidage.

5. Guide de lumière selon l'une des revendications précédentes, **caractérisé en ce que** le tronçon de section variable (1024 ; 10024 ; 100024 ; 1000024) du guide comprend des moyens de fixation du guide.

6. Guide de lumière selon l'une des revendications précédentes, **caractérisé en ce que** le dioptre de découplage (1034 ; 10034 ; 100034 ; 1000341, 1000342) de la ou d'au moins une des portions de découplage (1030 ; 10030, 100030 ; 1000301, 1000302) est généralement incliné par rapport à la surface adjacente du dioptre de guidage.

7. Guide de lumière selon l'une des revendications précédentes, **caractérisé en ce que** la ou au moins une des portions de découplage (1030 ; 10030, 100030 ; 1000301, 1000302) forme un volume prismatique.

8. Guide de lumière selon l'une des revendications précédentes, **caractérisé en ce que** la section longitudinale de la ou de au moins une des portions de découplage (1030') comporte un profil courbe (1034').

9. Guide de lumière selon l'une des revendications précédentes, **caractérisé en ce que** sa surface extérieure comprend à une face arrière du guide une série de facettes réfléchissantes (1016, 10016 ; 100016 ; 1000016) destinées à découpler par réflexion des rayons parcourant le guide, la ou au moins une des portions de découplage (1030 ; 10030 ; 100030 ; 1000301, 1000302) du guide étant disposée sur la face arrière et/ou une face avant (1017 ; 10017 ; 100017 ; 1000017) opposée à la face arrière.

10. Dispositif d'éclairage et/ou de signalisation (1002 ; 10002 ; 100002 ; 1000002) pour véhicule comprenant un guide de lumière (1004, 10004 ; 100004 ; 1000004) destiné à être alimenté en rayons lumineux par une source lumineuse (1006 ; 10006; 100006 ; 1000006) et ayant un axe optique correspondant à une direction principale d'éclairage et/ou de signalisation ;
**caractérisé en ce que**
le guide de lumière (1004 ; 10004 ; 100004 ; 1000004) est conforme à l'une des revendications 1 à 9 ; et
le dispositif comprend au moins un cache (1012 ; 10121, 10122 ; 100121, 100122 ; 1000121, 1000122) disposé de manière à récolter les rayons sortant de la ou d'au moins une des portions de découplage (1030 ; 10030 ; 100030 ; 1000301, 1000302).

11. Dispositif d'éclairage et/ou de signalisation selon la revendication 10, **caractérisé en ce que** le ou au moins un des caches (1012 ; 10121 ; 100121 ; 1000121, 1000122) est disposé en vis-à-vis de ladite portion de découplage (1030 ; 10030 ; 100030 ; 1000301, 1000302).

12. Dispositif d'éclairage et/ou de signalisation selon la revendication 10 ou 11, **caractérisé en ce que** le ou au moins un des caches (1012 ; 10121 ; 100121 ; 1000121) est en vis-à-vis de la face avant de la surface extérieure du guide.

13. Dispositif d'éclairage et/ou de signalisation selon la revendication 12, **caractérisé en ce que** le guide de lumière est conforme à la revendication 10, et **en ce que** le ou au moins un des caches (1012 ; 10121 ; 100121 ; 1000121) s'étend le long du guide essentiellement depuis son extrémité jusqu'au niveau de la série de facettes réfléchissantes (1016 ; 10016 ;100016 1000016).situées sur la face arrière du guide.

14. Dispositif d'éclairage et/ou de signalisation selon la revendication 10 ou 11, **caractérisé en ce que** le ou au moins un des caches (10122 ; 100122 ; 1000122) est en vis-à-vis de la face arrière de la surface extérieure du guide.

15. Dispositif d'éclairage et/ou de signalisation selon la revendication 14, **caractérisé en ce que** le guide de lumière est conforme à la revendication 10, et **en ce que** le ou au moins un des caches (10122 ; 100122 ; 1000122) s'étend le long de la série de facettes réfléchissantes (10016 ; 100016 ; 1000016) en vis-à-vis de la face arrière de la surface extérieure du guide.

## Patentansprüche

1. Lichtwellenleiter (1004; 10004; 100004; 1000004) einer Beleuchtungs- und/oder Signalisierungsvorrichtung eines Kraftfahrzeugs, der eine Außenoberfläche beinhaltet, die ein Leitdiopter bildet, wobei der Leiter dazu fähig ist, Lichtstrahlen durch Reflexion auf das Leitdiopter zu leiten;
**dadurch gekennzeichnet, dass**
der Leiter Folgendes beinhaltet:
- mindestens einen Entkopplungsabschnitt (1030; 10030; 100030; 1000301, 1000302) mit einem Entkopplungsdiopter durch Brechung (1034; 10034; 100034; 1000341, 1000342), das so angeordnet ist, dass es Lichtstrahlen bricht, um sie von dem Leiter zu entkoppeln und sie so durch das Entkopplungsdiopter durch Brechung zur Außenseite des Leiters zu übertragen,
- ein Teilstück mit variablem Querschnitt (1024, 10024; 100024; 1000024), das eine Schräge bildet, wobei der oder mindestens einer der Entkopplungsabschnitte (1030; 10030; 100030; 1000301, 1000302) an dem Teilstück mit variablem Querschnitt angeordnet ist,
wobei die Schräge so ausgerichtet ist, dass der Querschnitt in der Lichtausbreitungsrichtung abnimmt, wobei die Schräge so konfiguriert ist, dass sie bei nicht vorhandenem Entkopplungsabschnitt Strahlen mit einem derartigen Winkel reflektieren würde, dass diese bei Auftreffen auf die gegenüberliegende Seite nicht durch interne Reflexion übertragen, sondern gebrochen würden.

2. Lichtwellenleiter nach Anspruch 1, **dadurch gekennzeichnet, dass** der Leiter mindestens zwei Entkopplungsabschnitte (1000301, 1000302) beinhaltet, die sich mit Bezug auf die Dicke des Leiters transversal gegenüberliegen.

3. Lichtwellenleiter nach einem der Ansprüche 1 und 2, **dadurch gekennzeichnet, dass** das Teilstück mit variablem Querschnitt (1024; 10024, 100024; 1000024) an ein Ende des Leiters angrenzt, vorzugsweise an ein Ende, das eine Eintrittsseite (1008; 10008, 100008; 1000008) für Licht in den Leiter beinhaltet.

4. Lichtwellenleiter nach dem vorhergehenden Anspruch, **dadurch gekennzeichnet, dass** der oder mindestens einer der Entkopplungsabschnitte (1030; 10030; 100030; 1000301, 1000302) in der Nähe des Endes des Leiters angeordnet ist, um überwiegend Strahlen, die von dem Ende des Leiters kommen, zu entkoppeln, ohne dass diese durch das Leitdiopter reflektiert werden.

5. Lichtwellenleiter nach einem der vorhergehenden Ansprüche, **dadurch gekennzeichnet, dass** das Teilstück mit variablem Querschnitt (1024; 10024; 100024; 1000024) des Leiters Mittel zur Befestigung des Leiters beinhaltet.

6. Lichtwellenleiter nach einem der vorhergehenden Ansprüche, **dadurch gekennzeichnet, dass** das Entkopplungsdiopter (1034; 10034; 100034; 1000341, 1000342) des oder mindestens eines der Entkopplungsabschnitte (1030; 10030, 100030; 1000301, 1000302) mit Bezug auf die angrenzende Oberfläche des Leitdiopters im Wesentlichen geneigt ist.

7. Lichtwellenleiter nach einem der vorhergehenden Ansprüche, **dadurch gekennzeichnet, dass** der oder mindestens einer der Entkopplungsabschnitte (1030; 10030, 100030; 1000301, 1000302) ein prismatisches Volumen bildet.

8. Lichtwellenleiter nach einem der vorhergehenden Ansprüche, **dadurch gekennzeichnet, dass** der Längsteil des oder mindestens eines der Entkopplungsabschnitte (1030') ein gekrümmtes Profil (1034') aufweist.

9. Lichtwellenleiter nach einem der vorhergehenden Ansprüche, **dadurch gekennzeichnet, dass** seine Außenoberfläche auf einer hinteren Seite des Leiters eine Reihe von reflektierenden Facetten (1016, 10016; 100016; 1000016) beinhaltet, die dazu bestimmt sind, durch den Leiter verlaufende Strahlen durch Reflexion zu entkoppeln, wobei der oder mindestens einer der Entkopplungsabschnitte (1030; 10030; 100030; 1000301, 1000302) des Leiters auf der hinteren und/oder einer vorderen Seite (1017; 10017; 100017; 1000017) gegenüber der hinteren Seite angeordnet ist.

10. Beleuchtungs- und/oder Signalisierungsvorrichtung (1002; 10002; 100002; 1000002) für ein Fahrzeug, die einen Lichtwellenleiter (1004, 10004; 100004; 1000004) beinhaltet, der dazu bestimmt ist, von einer Lichtquelle (1006; 10006; 100006; 1000006) mit Lichtstrahlen versorgt zu werden, und der eine optische Achse aufweist, die einer Beleuchtungs- und/oder Signalisierungshauptrichtung entspricht;
**dadurch gekennzeichnet, dass**
der Lichtwellenleiter (1004; 10004; 100004; 1000004) einem der Ansprüche 1 bis 9 entspricht; und
die Vorrichtung mindestens eine Strahlenblende (1012; 10121, 10122; 100121, 100122; 1000121, 1000122) beinhaltet, die so angeordnet ist, dass sie die Strahlen, die aus dem oder mindestens einem der Entkopplungsabschnitte (1030; 10030; 100030; 1000301, 1000302) austreten, sammelt.

11. Beleuchtungs- und/oder Signalisierungsvorrichtung nach Anspruch 10, **dadurch gekennzeichnet, dass** die oder mindestens eine der Strahlenblenden (1012; 10121; 100121; 1000121, 1000122) gegenüber dem Entkopplungsabschnitt (1030; 10030; 100030; 1000301, 1000302) angeordnet ist.

12. Beleuchtungs- und/oder Signalisierungsvorrichtung nach Anspruch 10 oder 11, **dadurch gekennzeichnet, dass** sich die oder mindestens eine der Strahlenblenden (1012; 10121; 100121; 1000121) gegenüber der vorderen Seite der Außenoberfläche des Leiters befindet.

13. Beleuchtungs- und/oder Signalisierungsvorrichtung nach Anspruch 12, **dadurch gekennzeichnet, dass** der Lichtwellenleiter Anspruch 10 entspricht und dass sich die oder mindestens eine der Strahlenblenden (1012; 10121; 100121; 1000121) entlang des Leiters im Wesentlichen von seinem Ende bis zum Bereich der Reihe reflektierender Facetten (1016; 10016; 100016; 1000016), die sich auf der hinteren Seite des Leiters befinden, erstreckt.

14. Beleuchtungs- und/oder Signalisierungsvorrichtung nach Anspruch 10 oder 11, **dadurch gekennzeichnet, dass** sich die oder mindestens eine der Strahlenblenden (10122; 100122; 1000122) gegenüber der hinteren Seite der Außenoberfläche des Leiters befindet.

15. Beleuchtungs- und/oder Signalisierungsvorrichtung nach Anspruch 14, **dadurch gekennzeichnet, dass** der Lichtwellenleiter Anspruch 10 entspricht und dass sich die oder mindestens eine der Strahlblenden (10122; 100122; 1000122) entlang der Reihe von reflektierenden Facetten (10016; 100016; 1000016) gegenüber der hinteren Seite der Außenoberfläche des Leiters erstreckt.

## Claims

1. Light guide (1004; 10004; 100004; 1000004) for a lighting and/or signalling device of a motor vehicle comprising an exterior surface forming a guiding dioptric interface, the guide being able to guide light rays by reflection from the guiding dioptric interface;
**characterized in that**
the guide comprises:
- at least one decoupling segment (1030; 10030; 100030; 1000301, 1000302), with a refractively decoupling dioptric interface (1034; 10034; 100034; 1000341, 1000342) arranged so as to refract light rays in order to decouple them from the guide, and thus to transmit them to the exterior of the guide through the refractively decoupling dioptric interface,
- a section of variable cross-section (1024, 10024; 100024; 1000024), forming a draft, the or at least one of the decoupling segments (1030; 10030; 100030; 1000301, 1000302) being placed in the section of variable cross-section,
the draft being oriented so that the cross section decreases in the direction of propagation of the light, the draft being configured such that if the decoupling segment were absent it would reflect the rays with an angle such that, once they reached the opposite face, they would not be transmitted by internal reflection but refracted.

2. Light guide according to Claim 1, **characterized in that** the guide comprises at least two decoupling segments (1000301, 1000302) that are transversely opposite with respect to the thickness of the guide.

3. Light guide according to one of Claims 1 and 2, **characterized in that** the section of variable cross-section (1024; 10024, 100024; 1000024) is adjacent to an end of the guide, and preferably to an end comprising an entrance face (1008; 10008, 100008; 1000008) of light into the guide.

4. Light guide according to the preceding claim, **characterized in that** the or at least one of the decoupling segments (1030; 10030; 100030; 1000301, 1000302) is placed in proximity to the end of the guide so as to decouple most of the rays coming from the end of the guide without said rays being reflected by said guiding dioptric interface.

5. Light guide according to one of the preceding claims, **characterized in that** the section of variable cross-section (1024; 10024; 100024; 1000024) of the guide comprises means for fastening the guide.

6. Light guide according to one of the preceding claims, **characterized in that** the decoupling dioptric interface (1034; 10034; 100034; 1000341, 1000342) of the or of at least one of the decoupling segments (1030; 10030; 100030; 1000301, 1000302) is also inclined with respect to the adjacent surface of the guiding dioptric interface.

7. Light guide according to one of the preceding claims, **characterized in that** the or at least one of the decoupling segments (1030; 10030; 100030; 1000301, 1000302) forms a prismatic volume.

8. Light guide according to one of the preceding claims, **characterized in that** the longitudinal cross-section of the or of at least one of the decoupling segments (1030') comprises a curved profile (1034').

9. Light guide according to one of the preceding claims, **characterized in that** its exterior surface comprises, on a rear face of the guide, a series of reflective facets (1016, 10016; 100016; 1000016) that are intended to reflectively decouple rays propagating through the guide, the or at least one of the decoupling segments (1030; 10030; 100030; 1000301, 1000302) of the guide being placed on the rear face and/or a front face (1017; 10017; 100017; 1000017) opposite the rear face.

10. Vehicle lighting and/or signalling device (1002; 10002; 100002; 1000002) comprising a light guide (1004; 10004; 100004; 1000004) intended to be supplied with light rays by a light source (1006; 10006; 100006; 1000006) and having an optical axis corresponding to a main lighting and/or signalling direction;
**characterized in that**
the light guide (1004; 10004; 100004; 1000004) is according to one of Claims 1 to 9; and
the device comprises at least one shield (1012; 10121, 10122; 100121, 100122; 1000121, 1000122) placed so as to collect the rays exiting from the or at least one of the decoupling segments (1030; 10030; 100030; 1000301, 1000302).

11. Lighting and/or signalling device according to Claim 10, **characterized in that** the or at least one of the shields (1012; 10121; 100121; 1000121, 1000122) is placed facing said decoupling segment (1030; 10030; 100030; 1000301, 1000302).

12. Lighting and/or signalling device according to Claim 10 or 11, **characterized in that** the or at least one of the shields (1012; 10121; 100121; 1000121) is located facing the front face of the exterior surface of the guide.

13. Lighting and/or signalling device according to Claim 12, **characterized in that** the light guide is according to Claim 10, and **in that** the or at least one of the shields (1012; 10121; 100121; 1000121) extends along the guide essentially from its end to level with the series of reflective facets (1016, 10016; 100016; 1000016) located on the rear face of the guide.

14. Lighting and/or signalling device according to Claim 10 or 11, **characterized in that** the or at least one of the shields (10122; 100122; 1000122) is located facing the rear face of the exterior surface of the guide.

15. Lighting and/or signalling device according to Claim 14, **characterized in that** the light guide is according to Claim 10, and **in that** the or at least one of the shields (10122; 100122; 1000122) extends along the series of reflective facets (10016, 100016; 1000016) facing the rear face of the exterior surface of the guide.
